# EUROPEAN PATENT APPLICATION

(11) **EP 4 299 513 A1**
(43) Date of publication of application: **03.01.2024**
(21) Application number: 22182626.6
(22) Date of filing: 01.07.2022
(51) Int. Cl.: C01B 32/00, C01B 32/05, B01J 21/18, H01M 4/92, H01M 8/10

(54) **PROCESS FOR PREPARING A GRAPHITIZED NANOPOROUS CARBON, THE SO-OBTAINED CARBON PARTICLES AND THE USE THEREOF AS HIGHLY STABLE SUPPORTS FOR ELECTROCHEMICAL PROCESSES**

(71) Applicant: Studiengesellschaft Kohle gGmbH, 45470 Mülheim (DE)
(72) Inventor: SCHUETH, Ferdi, 45470 Mülheim an der Ruhr (DE); HOPF, Alexander, 45468 Mülheim an der Ruhr (DE)

(57) **Abstract**

The present invention refers to a process for preparing a graphitized nanoporous carbon, the so-obtained carbon particles_and the use thereof as highly stable supports for electrochemical processes.

## Description

The present invention refers to a process for preparing a graphitized nanoporous carbon, the so-obtained carbon particles and the use thereof as highly stable supports for electrochemical processes.

Due to their high conductivity, stability and accessibility, carbon materials are a widely used catalyst support material for electrochemical processes. For polymer exchange membrane fuel cells (PEMFCs), platinum and its alloys on carbon black are the state-of-the-art catalysts. Hollow graphitic spheres (HGS) as disclosed in WO2013/117725 A1 combine the advantages of carbon blacks with their uniform morphology and defined porosity in the low mesopore range. Through the confinement of metal nanoparticles (NPs) in the pores, the resistance of PtM/HGS (M = Ø, Co, Ni) catalysts toward the common degradation pathways of nanoparticle agglomeration and detachment has been shown, ultimately leading to catalysts superior to the commercially available alternatives. In addition, small mesopores have recently been portrayed to aid in the gas transport and resistance of PEMFC catalysts towards ionomer poisoning, making HGS an even more promising catalyst support. The synthesis of HGS involves the chemical vapor deposition of ferrocene into the pores of a hard template, followed by annealing and subsequent leaching of the hard template by hydrofluoric acid. This sequence, while highly controlled, is less economical and hardly scalable.

Therefore, it is the object of the present invention to provide a material maintaining the beneficial properties of HGS, namely their high graphitization and defined porosity in the low mesopore range which may be produced more economically.

The problem of the present invention is overcome by providing a process for preparing a graphitized nanoporous carbon, the so-obtained carbon and the use thereof as highly stable supports for electrochemical processes, in particular derived from a resorcinol-formaldehyde (RF) gel, which allows for a significantly simplified preparation sequence.

In more detail, the present invention is directed to a process for preparing a graphitized nanoporous carbon which comprises the steps of:
a) preparing a mixture of
   i) a nucleophilic compound, selected from melamin, melam, melem, ammeline, 4,6-amino-dihydroxy-1,3,5-triazine, aminophenol, diaminobenzene, dihydroxybenzene, trihydroxybenzene and any combination thereof,
   ii) formaldehyde or an oligomer thereof in a stoichiometric excess to compound i) for a complete polymerisation,
   iii) a metallic graphitization catalyst in a molar ratio of the metallic graphitization catalyst to compound i) in the range of 1 to 30 to 1 to 3, optionally in the range of 1 to 10 to 1 to 3, wherein the metallic graphitization catalyst is selected from Fe-salts, Co-salts or Ni-salts of organic acids or of acidic organic compounds, in particular Fe acetate, Fe formiate, Fe oxalate, Ni oxalate, Ni acetate, Ni formiate, Co oxalate, Co acetate, Co formiate, Fe(II)(acac)₂, Fe(III)(acac)₃, Ni(II)(acac)₂, Co(II)(acac)₂, Co(III)(acac)₃ or any combination thereof, and optionally
   iv) a catalytic amount of promoter compound, preferably ammonia,
      in a solvent, comprising water and a C₁ to C₄ aliphatic alcohol in a volume ratio of 0% by volume to 100% by volume of water, the remainder being the C₁ to C₃ aliphatic alcohol, referred to the total volume of the solvent; the solvent preferably being an aqueous solution having a content of 10% to 40% by volume of said C₁ to C₄ aliphatic alcohol;
b) heating the mixture obtained in step a) to a temperature range between 30°C and 100°C and maintaining the mixture in said temperature range for a time range between 6 and 60 hours, preferably 6 to 50 hours,
c) separating the reaction product obtained in step b) from the aqueous solvent, optionally grinding the separated reaction product and optionally washing the separated reaction product with fresh.aqueous solvent;
d) subjecting the separated reaction product obtained in step c) to a high temperature graphitization process in a temperature range of 600°C to 1000°C, whereby a graphitic framework is provided;
e) subjecting the so-obtained graphitized product obtained in step d) to a process for leaching out the metal of the metallic graphitization catalyst preferably by treatment with an inorganic acid; and
f) washing the reaction product obtained in step e) with water and C₁ to C₃ aliphatic alcohol and finally drying the washed product, followed by an optional grinding step.

In the inventive process, a catalytic amount of a promoter compound may be used in order to facilitate or to start the condensation process. As a promotor compound, a weakly acidic or basic compound such as sodium carbonate, sodium hydrogen carbonate may be used. Preferably, ammonia is used as it fully evaporates during the carbonisation process.

The solvent for the condensation is comprising water and a C₁ to C₄ aliphatic alcohol in a volume ratio of 0% by volume to 100% by volume of water, the remainder being the C₁ to C₃ aliphatic alcohol, referred to the total volume of the solvent; the solvent preferably being an aqueous solution having a content of 10% to 40% by volume of said C₁ to C₄ aliphatic alcohol. The alcohol is preferably ethanol.

In the inventive process, the nucleophilic compound, selected from melamin, melam, melem, ammeline, 4,6-amino-dihydroxy-1,3,5-triazine, aminophenol, diaminobenzene, dihydroxybenzene, trihydroxybenzene and any combination thereof, is reacted with formaldehyde or an oligomer thereof in a stoichiometric excess to compound i) which allows a substantially complete polymerisation/condensation of compound i) with formaldehyde to a polycondensed network.

In a further elaborated process for preparing the graphitized nanoporous carbon, the additional steps are contained, comprising:
g) impregnating the graphitized nanoporous product obtained in step f), preferably by the incipient wetness method, with a catalytically active metal, selected from Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y, preferably Pt, Ru, Pd, Au, Ag, Ni, Co, Ir, including salts and mixtures thereof, in the form of a solution of a metal salt or a mixture thereof,
h) subjecting the graphitized nanoporous product obtained in step g) to a hydrogenation process whereby catalytically active metal sites are formed;
i) subjecting the graphitized nanoporous product obtained in step h) to a further temperature treatment in a high temperature range of 600°C to 1400°C, preferably from 600°C to 1000°C in an atmosphere being inert with respect to the metal particle and the graphitized nanoporous product, whereby the microstructure is modified and the catalytically active metal sites are confined in the mesopores, whereby chemical properties and electrochemical properties are improved.

In one embodiment of the inventive process, compound i) is selected from resorcin, melamine and derivatives thereof, in particular resorcin.

In another embodiment of the inventive process, the metallic graphitization catalyst is selected from Fe(II)(acac)₂, Fe(III)(acac)₃, Ni(II)(acac)₂, Co(II)(acac)₂, Co(III)(acac)₃ or any combination thereof.

In yet another embodiment of the inventive process, the concentration of compound i) in the solvent is in the range of 0,01 mol/l to 0,5 mol/l. with stirring the mixture in step b).

In yet another embodiment of the inventive process, the concentration of compound i) in the solvent is in the range of 0,5 mol/l to 2,0 mol/l. without stirring the mixture in step b). The obtained product needs to be ground in most cases in view of its block structure.

The present invention is also directed to the graphitized nanoporous carbon particles obtainable according to any one of the processes as described before, and to the use thereof as catalyst, in particular for cathode side oxygen reduction reaction (ORR) in PEM fuel cells.

The step i) wherein the metal-loaded graphitic particles obtained in step h) are further treated/thermally treated in a high temperature range of 600 to 1400°C, preferably from 600 to 1000°C and preferably for time range of 1 to 10 hours, more preferably for 1 to 5 hours, and preferably under an inert atmosphere such as Argon, intended to modify the microstructure of the particles and to promote the confinement of the metal particles in the pore structure, is of particular importance for improving the electrochemical stability of the nanoparticles under detrimental potential cycling conditions.

After the leaching step, graphitic mesoporous particles are obtained which can be impregnated, in a further step, with a solution of a salt of a catalytically active metal such as Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, or Y or any combination thereof, preferably Pt, Ru, Pd, Au, Ag, Ni, Co, or Ir, in an impregnation step where the volume of a solution of the metal salt, preferably a chloride, or any combination of salts is completely absorbed in the mesopores of the graphitic particles, and which can be optionally dried. Said impregnation can be accomplished by using an alcoholic solution of a metal salt in an amount that the load of the particles with catalytically active metal is from 10 to 40 % by weight calculated on the basis of the complete weight of the final dry particles.

The catalytically active metal that can be used in the graphitic mesoporous particles according to the present invention is not limited, and may be one of Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, Y or any combination thereof. A suitable metal may vary according to a reaction to which the graphitic particles loaded with the metal, according to the present invention, are to be subjected. In addition, the metal may be a single metal or an alloy of two or more metals.

The thus obtained graphitic particles loaded with the metal precursor, or, in case of an alloy, with the mixture of metal precursors, are subjected to a hydrogenation process which is preferably carried out as gas-phase hydrogenation. Such gas-phase reduction can be applied in a common pressure range at elevated temperatures from 100 to 500°C. By this hydrogenation, metal clusters are formed in the mesoporous structure of graphite particles. Afterwards, a thermal treatment step at elevated temperatures defines the final microstructure of the metal or alloy nanoparticles and promotes the pore confinement for the improvement of chemical and electrochemical properties.

For completing the present invention, the inventors have analysed the options for preparing a suitable carbon support. For example, Resorcinol-Formaldehyde gels are polymers prepared through the polycondensation of resorcinol and formaldehyde. Their synthesis is versatile as changes in pH, temperature, solvent, drying condition, and added salt, base or acid result in polymers of different morphology. Due to their high surface area and tailorable porosity, carbonized RF gels are investigated in the state of art for application in electrochemical devices such as supercapacitors or batteries. For PEMFCs, RF gels were considered as support material, but with limited success, likely due to their low graphitization and high micropore volume. The existing literature describing the synthesis of RF gels is extensive and, admittedly describes both mesoporous and graphitized carbon materials stemming from RF-gels, as well as the combination thereof. To analyze why none of these materials were competitive with carbon blacks for the application as supports for PEMFCs, the characteristics of the RF system are described in more detail below.

The preparation of RF polymers may follow a sol-gel process. First, hydroxymethyl resorcinols are formed through the reaction of resorcinol and formaldehyde. Subsequently, these polyalcohols condense under the elimination of water, forming dispersed nanometer-sized clusters, also called the sol. The sol can be aged, oftentimes at elevated temperatures in a closed container, to prepare a gel. The gel is a three-dimensional, highly porous fractal structure of individual primary particles and its impressive morphology is often to be preserved. To this end, supercritical drying, e. g. with CO₂, is applied to form aerogels, retaining up to 90 % of the gel's volume. In some cases, the drying can proceed by freeze-drying with similar success, coining the term cryogels. If such elaborate drying techniques are to be evaded, subcritical drying results in xerogels, polymers with a collapsed, but still extensive pore structure. Alternatively, if the synthesis is performed under high dilution and stirring, individual spheres can be prepared, resembling the Stöber process to prepare monodisperse silica spheres.

For the application in electrochemical devices, the RF gels have to be conductive, and are thus carbonized, and potentially further activated to tailor the properties of the RF-carbons. The gels molecular composition is dominated by the benzene ring of resorcinol and therefore retains a high amount of mass and porous structure under carbonization. Without any aggregated structure of primary particles, carbonized RF-spheres possess porosity in the micropore region. These pores form due to the escape of reaction products such as water, CO and CO₂ from the bulk polymer during the transition to the carbon. For the preparation of mesoporous RF carbons, RF-gels are the precursor of choice. Since the size and connectivity of the primary particles forming the gel is highly tailorable, pores can be generated in the connection points of these clusters, or as pockets in the gel's structure. Through the modifications of the synthesis procedure, RF carbons with pore sizes over the entire mesopore range were already prepared in the state of the art. However, it is crucial to mention that the pore size distribution is often broad and, additionally, the pores are different from typical pores of HollowGraphiticSpheres, since they are not located in a particle, but in edges and corners of small, fractal primary particles. It is therefore ultimately questionable if the confinement of metal in these mesopores can provide the same stability enhancement known from HGS, whose mesoporosity is intraparticular. Similar concerns apply to the improved transport properties and the protection against ionomer poisoning enabled by mesoporous supports. RF gels with intraparticular porosity are reported using surfactants or hard templating, but, while highly defined textures are obtained, the synthesis sequences are complex and share the downsides of the HGS' preparation stated earlier.

Increasing the conductivity of RF carbons through graphitization as done here presents an appropriate pathway to improve their suitability for electrochemical processes, where the high stability and electrical conductivity of graphitic carbon is beneficial. In the state of art, the electrical conductivity of different RF xerogels carbonized at 800°C was compared with carbon black and it was found that the latter was more conductive by a factor of ten, independent of the xerogels' composition. The carbonization at high temperatures and the addition of graphitization catalysts before annealing are routes to increase the graphitization of RF carbons. If no catalyst if used, temperatures well above 2000 °C are generally required to form graphitized carbons from polymers. Thus, mostly transition metal catalysts such as iron or nickel are included in the RF-polymer before carbonization, be it by addition to the synthesis mixture or by post-impregnation of the polymer. Although through these methods, graphitic carbons were prepared from RF polymers, the flexibility of the synthesis is decreased significantly. If metal salts are integrated into the synthesis mixtures, the anyway complex reaction mixture requires further balancing, e. g. to negate the effect of acidic metal salts on the pH. Post-impregnation can serve as an alternative, but it adds another step to the synthesis and likely has a less pronounced effect on graphitization, as the catalyst is deposited on the carbon surface, and not in the structure itself.

To recapitulate, the preparation of RF carbons is highly tailorable and the associated literature extensive. In the prior art however, the synthesis of mesoporous graphitic RF carbons is relying on the use of hard templates, surfactants or large amounts of metal salts. Further, additional steps such as elaborate drying, hydrothermal treatments, post-impregnation or activation complicate the fundamentally simple reaction. The investigation of facile synthesis routes towards graphitic mesoporous RF carbons is therefore highly relevant. If a simple, scalable preparation sequence were to be found as provided by the present invention, the carbon is a good candidate for electrochemical processes, among other as a support material for PEMFC catalysts.

As presented here, the inventors synthesize graphitic RF-spheres by introducing iron salts into the RF synthesis mixture. The inventors show how different salts affect the pH of the mixture and the impact on the morphology of the polymers. Finally, using iron acetylacetone as a combined porogen and graphitization agent, the inventors present the scalable synthesis of mesoporous and highly graphitic carbon spheres (GRF). The inventors require no hydrothermal steps, and dry in air overnight and thus evade solvent exchanges, supercritical drying, or post-activation treatments. The GRFs are comprehensively characterized using XRD, TG-MS, N₂-physisorption and TEM. Subsequently, the inventors load the GRF with metal nanoparticles such as platinum nanoparticles (Pt/GRF) and evaluate the materials as a catalyst for the oxygen reduction reaction (ORR). Pt/GRF presents activity comparable to industry-established Pt on carbon black, while being significantly more stable in accelerated degradation tests (ADTs). Due to the simple and scalable synthesis procedure and the beneficial morphology of GRF resembling the highly stable HGS, the inventors see GRF as a potential candidate for industrial application.

### Experimental Part

The invention is further illustrated by the attached Figures and Examples. In the Figures, the respective Figure shows:

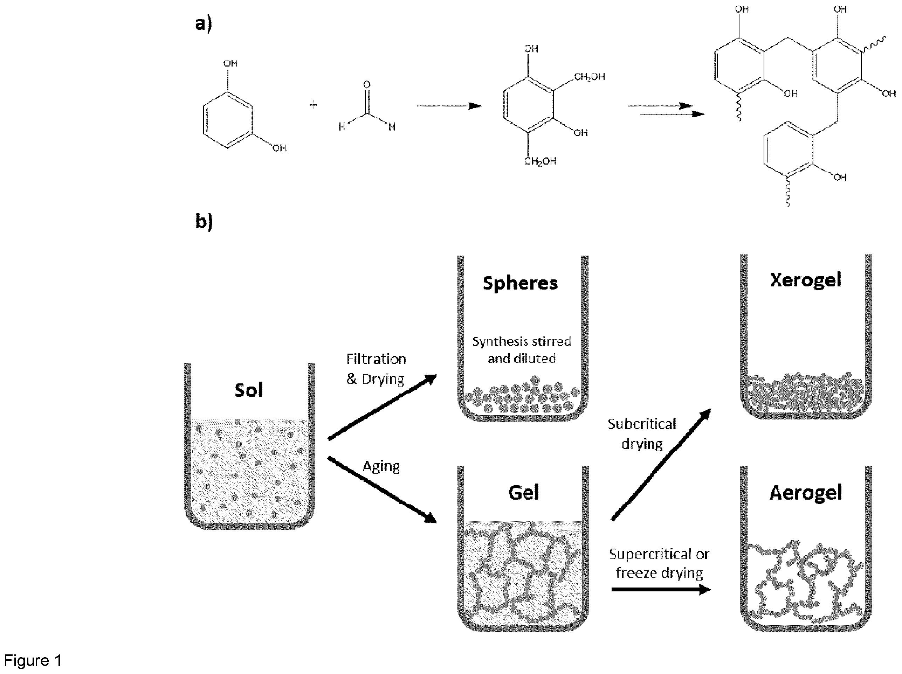

- Figure 1:: a) Simplified reaction scheme of the polycondensation of resorcinol and formaldehyde.
b) Overview of different synthesis routes towards RF-spheres or -gels.
- Figure 2:: Overview of the pH of the reaction mixtures (pH_{Rct-Sol}) in comparison to 1.0 M solutions of the salts in water (pHwater). Below the table, exemplary digital pictures of the polymers are provided. Due to the low solubility of the iron acetylacetonates in water, the salts were not fully dissolved and thus the measured pH represents the value of a saturated solution of the salts.
- Figure 3:: Comparison of the N₂-physisorption isotherms (left) and the XRD patterns (right) of the RF polymer prepared with Fe(acac)₂ in pristine state, after carbonization and after leaching. The intensity of the XRD patterns was normalized to the (002) reflection of graphite (~ 26°) for the "Leached" and "Carbonized" state, while the pattern stemming from the analysis of the polymer is plotted as absolute intensity. After graphitization, a significant increase in porosity is observed. In addition, the (002) reflection (~26°) in the XRD pattern indicates a formation of graphitic carbon.

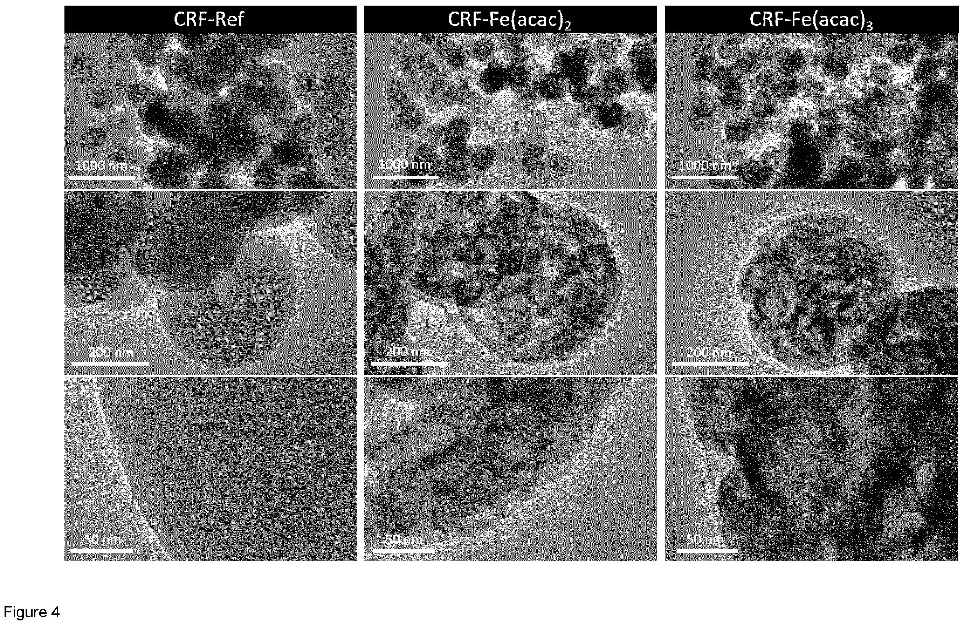

- Figure 4:: TEM micrographs of different magnification of the CRFs prepared with iron acetylacetonates. In contrast to the reference material prepared without iron salt (CRF-Ref, left), the formation of a porous, highly graphitic structures is observed.

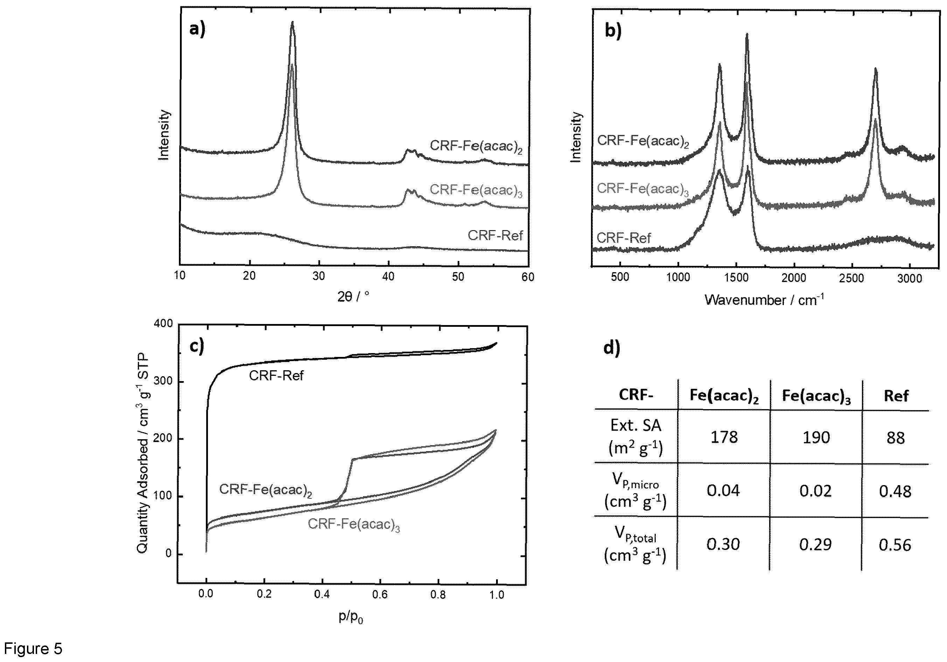

- Figure 5:: Summary of the characterization of the CRFs prepared by
a) XRD,
b) Raman spectroscopy and
c) N₂-Physisorption.
In addition, the relevant characteristics such as external surface area (Ext. SA), micropore volume (V_{P,micro}) and total pore volume (V_{P,total}) determined at 0.95 p/p₀ are compared in the table d). In both XRD and Raman spectroscopy, the high graphitization of CRF-Fe(acac)₂ and CRF-Fe(acac)₃ is observed in contrast to the reference material. A large difference in porosity is similarly visible, as the samples prepared with iron are predominantly mesoporous, while CRF-Ref is almost exclusively microporous.

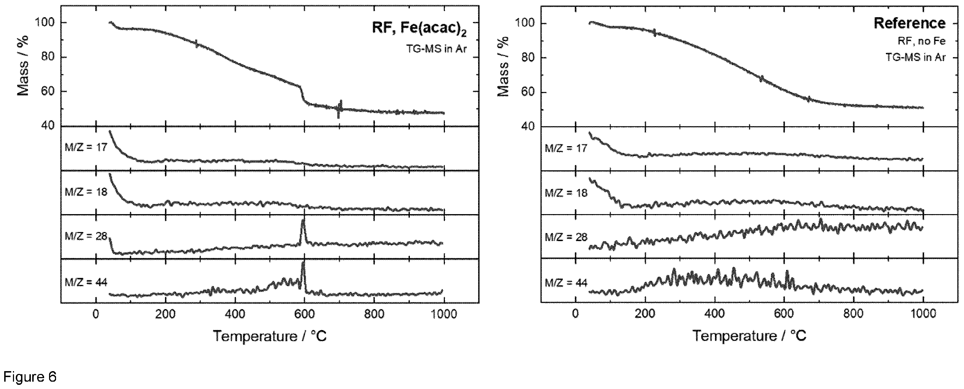

- Figure 6:: Summary of the TG-MS measurements of the polymer RF-Fe(acac)₂ in argon. The mass loss is indicated in the upper part, while the ion count of selected fragments is shown below. In contrast to the reference material without iron salt (right), a steep mass decrease is observed at 600 °C. This suggests a porogenic effect of the acetylacetonate ligands under graphitization and explains the observed mesoporosity of the carbon materials.

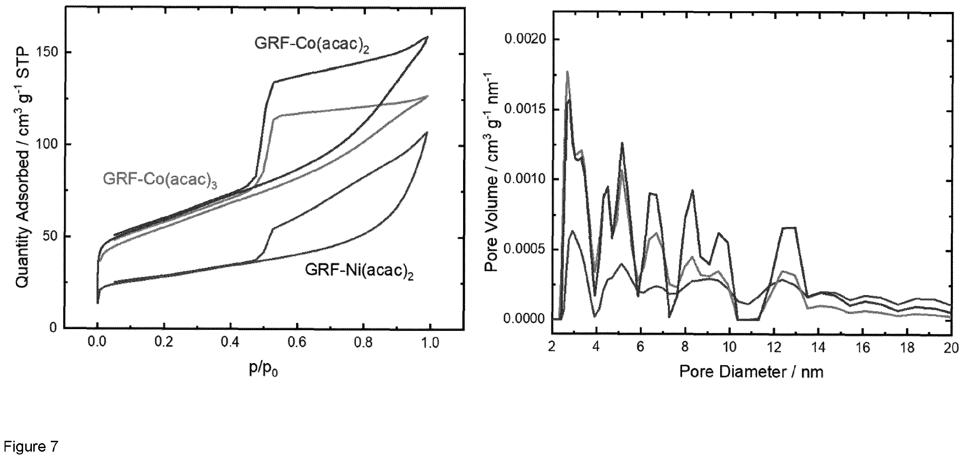

- Figure 7:: Characterization of GRFs prepared using Co and Ni acetylacetonates by N₂-physisorption. The isotherms are shown on the left side, while the pore size distribution determined using the DFT carbon slit model for N₂ at 77 K is presented on the right side. Similar to the materials prepared using iron acetylacetonate, the porosity of the carbons is predominantly in the mesoporous range desired for ORR catalyst supports, however, a material with an overall lower porosity is obtained when using Ni(acac)₂ as the iron salt.

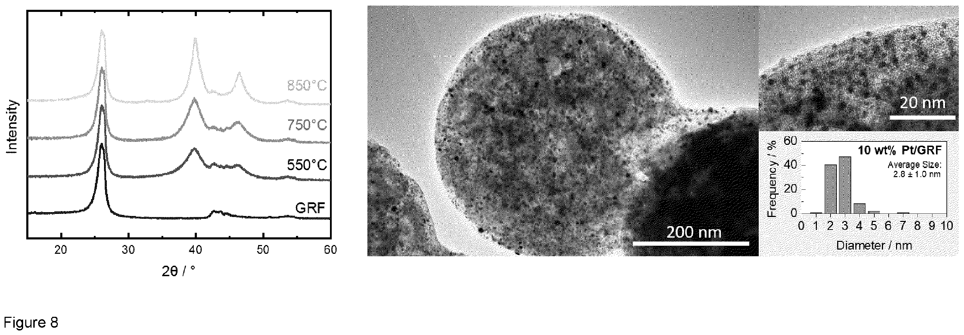

- Figure 8:: Comparison of the XRD patterns of Pt nanoparticles (NPs) deposited on GRF (left). The carbon GRF was prepared through the graphitization of RF-Fe(acac)₂ and subsequent leaching with HCI. Pt NPs were prepared by incipient wetness impregnation of the GRF with an aqueous solution of H₂PtCl₆, followed by annealing for 2.5 h at the indicated temperatures. TEM micrographs and a histogram of the Pt particle size distribution of the sample annealed at 750 °C are provided in addition. The Pt NP size can be adjusted by variation of the annealing temperature. The NPs are deposited into the pore system of GRF and, if annealing is performed at 750 °C, possess and average size of 2.8 ± 1.0 nm, which is in the optimal range for Pt-based ORR catalysts.

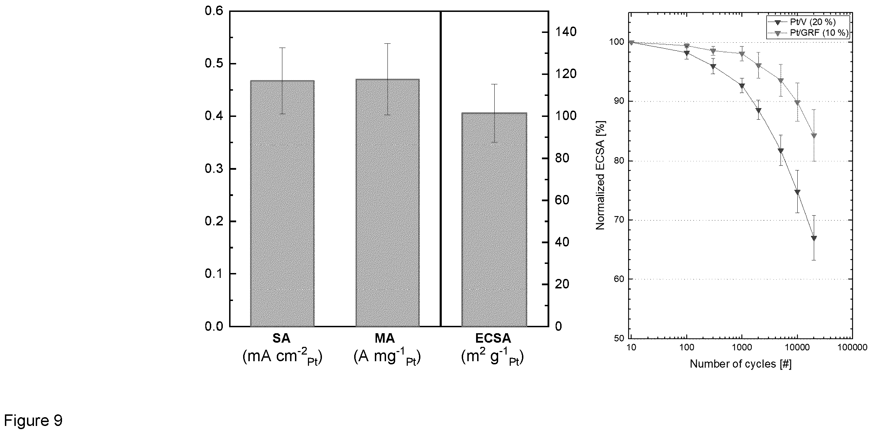

- Figure 9:: Overview of activity (left) and stability (right) of the Pt/GRF catalyst for the catalysis of the ORR, as determined by evaluation in a rotating disc electrode (RDE) half cell setup. The mass activity (MA) was calculated from the current at 0.9 V (RHE) at a rotational frequency of 1600 rpm. The ECSA was determined by CO stripping. The specific activity (SA) was calculated from the MA and ECSA. For the stability investigation, the catalysts were subjected to an accelerated degradation protocol consisting of 20000 square wave cycles from 0.6 to 1.0 V (RHE) with a hold time of 1 s. The ECSA was determined by CO-stripping after the indicated number of cycles. As a comparison, a catalyst consisting of Pt NPs on Vulcan XC 72R was subjected to the same treatment. More details are available in the experimental section. The Pt/GRF catalyst shows high activity for the ORR and a large specific surface area of approximately 100 m² g⁻¹_{Pt}. The stability of Pt/GRF under potential cycling is superior to Pt NPs supported on a commercial carbon black, with a low decrease of -15 % in ECSA in comparison to a loss of >30 % for Pt/V.

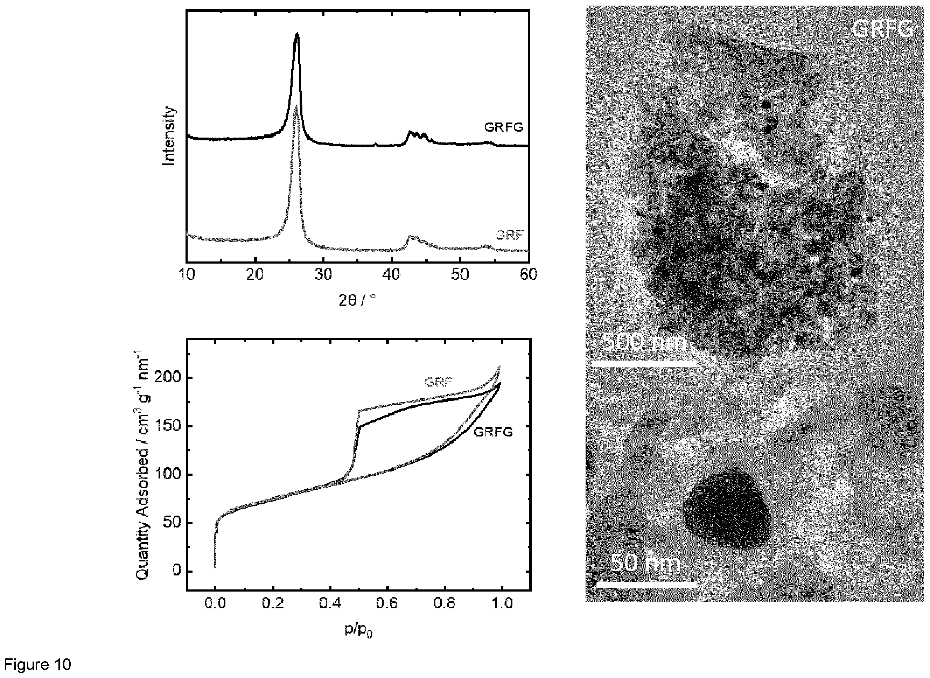

- Figure 10:: Comparison of XRD (top left) and N₂-physisorption (bottom left) data for GRF and GRFG, as well as micrographs of different magnification for GRFG (right). GRFG was prepared by increasing the reactant concentrations in the water/ethanol mixture 25-fold as compared to the preparation of GRF, while maintaining the Resorcinol : Formaldehyde : Fe(acac)₂ ratio and ammonia concentration. Even though the spherical morphology of the carbon is lost, GRFG still possesses the high graphitization and mesoporous texture of GRF, underlining the excellent scalability of this reaction.

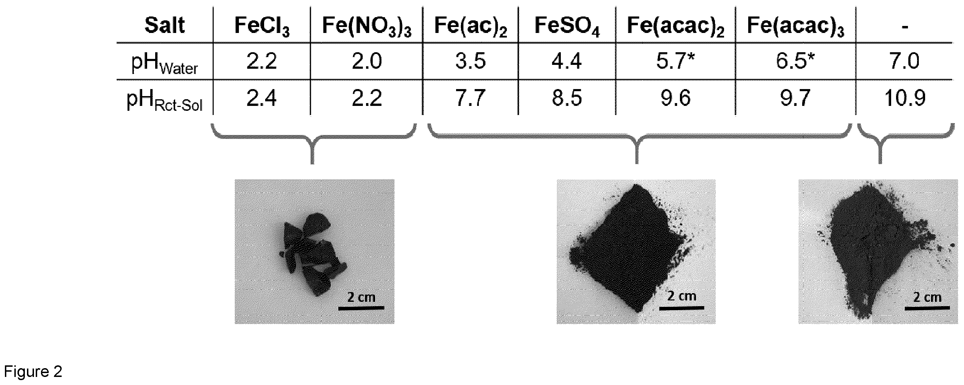

As illustrated in Figure 2, a simplified reaction scheme of the polycondensation of resorcinol and formaldehyde is shown together with an overview of different synthesis routes towards RF-spheres or RF-gels.

Since the RF polymerization is highly sensitive to the pH, the latter was measured 15 min after full dissolution of the reactants. In Figure , the texture of the polymer is compared for the different salts and referenced to the pH of the salts and the respective synthesis mixtures. Due to the low solubility of the iron acetylacetonates in water, the mixture was not fully clear and thus the measured pH represent the value of a saturated solution of the salts. As anticipated, the impact of acidic iron salts on the pH of the reaction mixture is pronounced. For both FeCl₃ and Fe(NO₃)₃, the pH is shifted from approximately 11 for the reference without iron salt to 2, completely changing the behavior of the reaction. Macroscopically, this manifests in a dense polymer that cannot be dispersed, so that the successful formation of uniform spherical particles can be excluded. For all other salts, the pH remains in the alkaline region and orange powders are obtained after filtration and drying. The inclusion of iron into the polymer can be expected due to the significantly darker color of the powders. Especially the reactions involving iron acetylacetonates are promising, as the salts hardly affect the pH of the mixture.

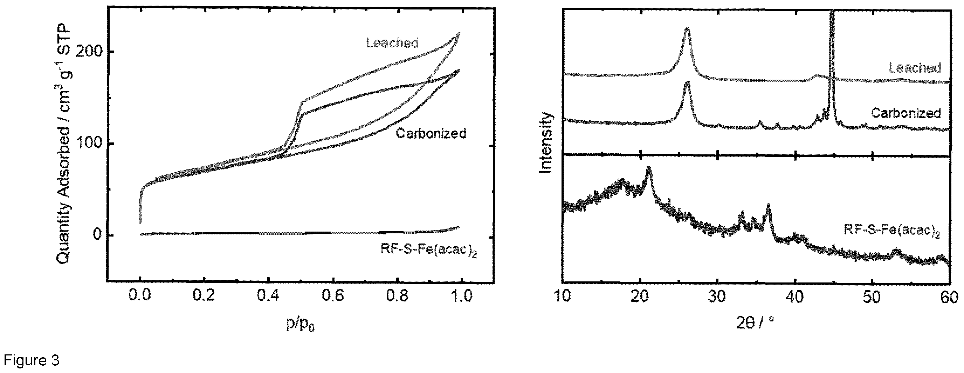

Further in Figure 3, a comparison of the N₂-physisorption isotherms (left) and the XRD patterns (right) of the RF polymer prepared with Fe(acac)₂ are shown in pristine state, after carbonization and after leaching. The intensity of the XRD patterns was normalized to the (002) reflection of graphite (~ 26°) for the "Leached" and "Carbonized" state, while the pattern stemming from the analysis of the polymer is plotted as absolute intensity. After graphitization, a significant increase in porosity is observed. In addition, the (002) reflection (~26°) in the XRD pattern indicates a formation of graphitic carbon.

In the next part, the synthesis of CRF-S-Fe(acac)ₓ is investigated in more detail. Firstly, the inventors scale up the synthesis 10-fold to a 1 L flask, yielding approximately 6 g of iron-containing polymer in one batch. In addition, the inventors replace the hydrothermal treatment (24 h at 100 °C in a Teflon-lined autoclave) by stirring at 70 °C for 24 h, significantly reducing complexity, especially for the preparation of larger quantities. As shown in in the TEM micrographs in **Fehler! Verweisquelle konnte nicht gefunden werden.**, CRF-Fe(acac)₂ and CRF-Fe(acac)₃ are mesoporous and highly graphitic. Indeed, in comparison to the materials prepared with a solvothermal step, the synthesis at lower temperature but under stirring enables the preparation of carbon spheres with a more narrow size distribution, e. g. 367 ± 32 nm for CRF-Fe(acac)₃.

The characterization with N₂-physisorption, XRD and Raman spectroscopy is summarized in Figure .

To investigate the formation of the mesoporous system formed in the two samples prepared with iron acetylacetonate, TG-MS measurements in argon were performed, starting from the nonporous polymer as shown in Figure .

As illustrated in Figure 7, the characterization of GRFs prepared using Co and Ni acetylacetonates by N₂-physisorption is shown. The isotherms are shown on the left side, while the pore size distribution determined using the DFT carbon slit model for N₂ at 77 K is presented on the right side. Similar to the materials prepared using iron acetylacetonate, the porosity of the carbons is predominantly in the mesoporous range desired for ORR catalysts, however, a material with an overall lower porosity is obtained when using Ni(acac)₂ as the salt.

The optimized synthesis of CRF-Fe(acac)₂ and CRF-Fe(acac)₃ yields highly graphitic, mesoporous carbon spheres. The preparation sequence is a one-pot reaction followed by filtration, drying at 80 °C in air and a carbonization under inert atmosphere, followed by HCI leaching. As compared to the literature, this procedure is strikingly simple, leveraging the use of iron acetylacetonate as a combined porogen and graphitization agent. To demonstrate the applicability of CRF-Fe(acac)₂, from now on called GRF, as a support for PEMFC catalysts, the inventors load it with Pt NPs through the incipient wetness impregnation (IWI) with aqueous H₂PtCl₆ and subsequent reduction and annealing. An annealing temperature variation is performed to determine suitable conditions yielding platinum particles of 3 nm in diameter. The XRD patterns, and TEM micrographs of the ultimately selected Pt/GRF annealed at 750 °C are summarized in Figure 8. The samples annealed at different temperatures possess the expected reflections of Pt in the XRD pattern. As anticipated, there is a trend towards sharper reflections as the temperature is increased, prominently visible in the (111) reflection. The TEM micrographs, in accordance, show small particles of approximately 3 nm dispersed over the carbon.

As shown in Figure 9, Pt/GRF was evaluated as a catalyst for the ORR in a rotating disc electrode setup. For details on the electrochemical characterization, the reader is referred to the experimental section. The specific activity (SA), mass activity (MA) and electrochemical surface area (ECSA) are summarized in Figure . The activity and ECSA of Pt/GRF is in good agreement with the values expected from the literature and are essentially determined through the size of the Pt NPs. However, NPs of approximately 3 nm present a good compromise between high mass activity and stability, as NPs below 2 nm are prone to enhanced dissolution. The stability of Pt/GRF was investigated by an accelerated degradation protocol in the common voltage range of a PEMFC, between 0.6 and 1.0 V (RHE). In comparison to a catalyst consisting of Platinum NPs on Vulcan (Pt/V), Pt/GRF retained a significantly higher share of its ECSA after prolonged cycling (Figure 9). This indicates the successful confinement of the Pt NPs inside the mesopores of GRF, preventing agglomeration and detachment of the active metal.

Further, in Figure 10, a comparison of XRD (top left) and N₂-physisorption (bottom left) data for GRF and GRFG, as well as micrographs of different magnification for GRFG (right) are indicated. GRFG was prepared by increasing the reactant concentrations in the water/ethanol mixture 25-fold as compared to the preparation of GRF, while maintaining the Resorcinol : Formaldehyde : Fe(acac)₂ ratio and ammonia concentration. Even though the spherical morphology of the carbon is lost, GRFG still possesses the high graphitization and mesoporous texture of GRF, underlining the excellent scalability of this reaction

### Experimental Section

### Description of the methods

High resolution transmission electron microscopy (HR-TEM) images were obtained on a HF-2000 microscope equipped with a cold field emitter (CFE) and operated at a maximum acceleration voltage of 200 kV. Typically, the samples were placed on a Lacey carbon film supported by a copper grid. Solid samples were deposited on the Lacey carbon film without previous dissolution.

Room temperature XRD patterns were collected with a Bragg Brentano diffractometer (STOE THETA/THETA). The instrument is equipped with a secondary graphite monochromator (CuKα_{1,2} radiation) and a proportional gas detector. The divergence slit was set to 0.8°, the receiving slit was set to 0.8 mm, and the width of the horizontal mask was 6 mm. The samples were prepared on a background free single crystal quartz sample holder.

Thermal analysis (thermogravimetry, TG) coupled with mass spectrometry (MS) was carried out on a Netzsch STA 449 F3 Jupiter thermal analysis instrument connected to a Netzsch QMS 403 D Aeolos mass spectrometer. The samples (approx. 10 mg) were heated from 45 to 1000 °C (heating rate, 10 °C min⁻¹) in a continuous flow of Ar (40 mL min⁻¹).

Nitrogen adsorption isotherms were recorded using a Micromeritics 3Flex instrument. The apparent specific surface area was estimated by applying the Brunauer-Emmet-Taylor (BET) algorithm. The t-plot method was applied to determine the micropore volume and external surface area. Carbon Black STSA was used as the thickness curve. The total pore volume was determined at 0.95 p/p₀ using the Gurvich rule.

Inductively coupled plasma optical emission spectroscopy (ICP-OES) analyses were performed on a Spectrogreen FMX 46 using an UVPIus Optic ORCA (Optimized Rowland Circle Alignment) optic system. To prepare liquid samples for measurement, approximately 10 mg of catalyst was leached in a mixture of 7.5 mL HCI, 2.5 mL HNO₃ and 0.8 mL H₂O₂. The suspension was heated at 180 °C in an Anton Paar Multiwave 5000 microwave oven for 5 min, after which it was allowed to cool down to ambient temperature naturally. Then, after diluting to 50 mL with mQ water and stirring overnight, the analysis was carried out, and metal concentrations were evaluated. Across the entire procedure, sample weights were measured using a Mettler Toledo XA205 Dual range and a Sartorius Entris II.

### Electrochemical Measurements

The specific activity (SA) and mass activity (MA) towards the ORR, as well as the electrochemical surface area (ECSA), were evaluated by electrochemical half-cell measurements in a three-electrode compartment Teflon cell using a rotating disk electrode (RDE) setup. A graphite rod was used as the counter electrode and a double junction Ag/AgCI (3 M KCI, Metrohm) electrode as the reference electrode. The cell compartment of the reference electrode was separated with a Nafion membrane to avoid the leaching of chloride ions during activity and stability measurements. All potentials are given with respect to the reversible hydrogen electrode (RHE). To ensure an accurate correction for the Ag/AgCl electrode potential, the potential was measured with the aid of a Pt electrode in an H₂-saturated electrolyte beforehand. This procedure was repeated for every activity and stability measurement with the tested Pt-based ORR catalysts as RHE.

Catalyst films were prepared by first dispersing the catalyst powders in ultrapure water (VWR) using an ultrasonic vial treater. Then, after an initial treatment of 30 min, a 20 µL ink droplet was pipetted onto a freshly polished glassy carbon disk electrode with a diameter of 5 mm (0.196 cm² geometrical surface area), embedded in a Teflon shell, and finally dried in air. The amount of catalyst on the electrode was 10 µg cm⁻² according to the platinum loading relative to the carbon support and dispersion. For both activity and stability measurements, 0.1 M HClO₄ (prepared by diluting 70% HClO₄ - Ultrapure, Carl Roth - with ultrapure water) was used as the electrolyte. The ohmic drop was corrected via positive feedback to have residual uncompensated resistance below 3 Ω.

Before each activity and stability measurement, the catalysts were subjected to 200-300 cleaning cycles in N₂-saturated electrolyte until a stable cyclovoltammogram (CV) was recorded. ORR activities were calculated via the Koutecký-Levich analysis at 0.9 V / RHE and a rotating frequency of 1600 rpm from the anodic scan of CVs recorded in O₂-saturated electrolyte with a scan rate of 50 mV s⁻¹. The CVs were corrected for capacitive processes by subtracting a CV recorded in nitrogen within the same potential window to isolate the current related to oxygen reduction. The specific activity (SA) is given as the kinetic current density normalized to the real surface area, derived from the electrochemical CO-oxidation charge. To this end, the peak of the CO-stripping CV was integrated after subtraction of a CV recorded in N₂-saturated electrolyte to correct for non-faradic contributions. The electrochemical surface area (ECSA) was calculated assuming a surface charge density of 380 µC cm⁻²_{Pt}. The mass activity (MA) was derived from the SA and ECSA. The stability measurement consisted of an accelerated degradation protocol based on voltage cycling with 10 800 CVs at 1 V s⁻¹ between 0.4 and 1.0 V/RHE. The degradation test was performed in N₂-saturated electrolyte without rotation and the ECSA was determined via CO-stripping.

### Synthesis of the RF carbon spheres

The synthesis of RF carbon spheres is based on the Stöber-type process towards uniform RF spheres. Typically, 40 mL of water, 16 mL of ethanol and 0.20 mL of ammonia solution (25 wt% in water) were mixed for 5 min. Subsequently, 0.40 g of resorcinol and an amount of iron salt allowing a molar ratio of iron to resorcinol of 1 : 3, was dissolved in the mixture under stirring. The pH measurement of the reaction mixture were performed at this stage. Following, 0.56 mL formaldehyde (37 wt-% in water with 10-15 % methanol) were added to the solution, which was further stirred for 24 h at 30 °C. After this step, for samples named as CRF-S-SALT, the reaction mixture was transferred to an autoclave with a teflon inlet and solvothermally treated without stirring at 100 °C for 24 h. For samples named CRF-SALT, the solvothermal treatment was replaced by stirring the reaction mixtures for 24 h at 70 °C in a round-bottom flask equipped with a reflux condenser. After both procedures, the solids were filtrated, washed with water and ethanol and dried overnight at 80°C in air. The carbonization, if not indicated otherwise, was performed at 1000 °C in a tube furnace in an argon flow of 100 mL min⁻¹ for 4 h. After cooling to room temperature naturally, iron residues within the black solids were leached twice in half concentrated HCI at 60 °C overnight. Finally, the powders were washed with copious amounts of water and ethanol and dried at 80 °C in air. Applying the reactant amounts stated above, a yield of approximately 600 mg polymer and finally roughly 200 mg of carbon was obtained. For the preparation of CRF-SALT samples, the reaction was scaled up 10-fold.

### Exemplary synthesis of the RF carbon gels

For the preparation of RF gels, 13.75 mL of water, 5.52 mL of Ethanol and 0.063 mL of ammonia solution (25 wt% in water) were mixed for 5 min in a 50 mL PE bottle. Subsequently, 3.00 g of resorcinol and 2.29 g Fe(acac)₂, allowing an iron to resorcinol molar ratio of 1 : 3, were dissolved under stirring. After complete dissolution, 4.06 mL of formaldehyde (37 wt-% in water with 10-15 % methanol) solution were added. The sealed bottle was subsequently stirred for 2 h at 50 °C, followed by 24 h at 70 °C. The mixture solidifies after approximately 6 h and stirring is halted. Following, the bottles are opened and the orange gel dried at 80 °C in air overnight. After drying, the polymer monoliths are crushed and ground to yield orange powders, which are carbonized and leached following the procedure described for the RF carbon spheres.

### Preparation of Pt/GRF

The GRF were loaded with Pt NPs following our recent literature on the synthesis of Pt/HGS. Briefly, 100 mg of GRF were dried in vacuo overnight. Following, the powder was impregnated with a solution of H₂PtCl₆ in an amount of water equaling 90 % of the total pore volume of the carbon. The impregnation was performed in three steps of equal volume under strong stirring and shaking. To ensure complete pore filling, the powder was sonicated for 30 min. The powder was dried, reduced and annealed in a tube furnace. The sample was dried at 120 °C (3 K min⁻¹) for 60 min under an Ar flow (200 mL min⁻¹) and subsequently heated to 220 °C (3 K min⁻¹) in a mixture of H₂ and Ar (40/160 mL min⁻¹) for 90 min. Finally, the powder was annealed at different temperatures for 2.5 h (5 K min⁻¹) under an Ar atmosphere (100 mL min⁻¹).

CRF-S-Fe(ac)₂ presents a broad pore size distribution of micro- and mesopores. The isotherm can be classified as type IV(a), but includes a sharp increase at low relative pressures associated with the filling of micropores. This isotherm is indicative of a fractal, disordered gel structure and in accordance with the TEM investigation. The porosity of CRF-S-Fe(acac)₂ and CRF-S-Fe(acac)₃ is almost identical, implying that the amount of ligand or oxidation state of iron has no influence on the porosity of the carbon. These carbons are dominantly mesoporous with a pronounced H2(a)-type hysteresis. Supported by the TEM micrographs, the inventors assume that the interconnected pore system inside the carbon spheres is open to the outside by smaller micro- or mesopores. Once the particles are filled with liquid N₂ during the sorption analysis, desorption from the cores of the spheres occurs once these smaller transport pores are opened, i. e. at significantly lower relative pressures.

In summary, CRF-Fe(acac)ₓ present spherical, mesoporous and highly graphitic carbons and are therefore candidates for further study and finally for the application as catalyst supports for electrochemical devices. The inventors consider that Fe(acac)ₓ is incorporated into the carbon structure due to the high affinity of the acetylacetonate anion to the metal cation, behaving as a ligand that doesn't dissociate in solution. This behavior is obvious in the pH effect described earlier and the low water solubility of the salts. The latter might further ease the incorporation into the polymer, as both iron acetylacetonate and the polymer are expected to have a similar hydrophilicity. CRF-S-Fe(ac)₂ differs from the other samples due to it's gel-like structure and therefore a similar graphitization as the bulk-like spheres cannot be expected. Indeed, its graphitization is high in comparison to carbonized RF gels reported in the literature.

The optimized synthesis of CRF-Fe(acac)₂ yields highly graphitic, mesoporous carbon spheres. The preparation sequence is a one-pot reaction followed by filtration, drying at 80 °C in air and a carbonization under inert atmosphere, followed by HCI leaching. As compared to the literature, this procedure is strikingly simple, leveraging the use of iron acetylacetonate as a combined porogen and graphitization agent. To demonstrate the applicability of CRF-Fe(acac)₂, from now on called GRF, as a support for PEMFC catalysts, the inventors load it with Pt NPs through the incipient wetness impregnation (IWI) with aqueous H₂PtCl₆ and subsequent reduction and annealing. An annealing temperature variation is performed to determined suitable conditions yielding platinum particles of 3 nm in diameter.

While the synthesis of GRF is simplified as compared to the common literature, the high control of the morphology, i. e. the preparation of uniform carbon spheres, comes with the downside of the relatively high dilution of the synthesis mixture. Using the current approach, approximately 2 g of carbon can be prepared per liter. For industrial purposes, increasing the volume yield of the preparation is desired. Thus, the inventors increase the concentration of resorcinol and formaldehyde 25-fold as compared to the synthesis of GRFs, while maintaining the NH₃-concentration as well as the ethanol/water and Fe/resorcin ratios. The polycondensation is performed under stirring at 70 °C over 24 h, but stirring comes to a stop by the solidification of the gel after 6 - 8 h, yielding a polymer gel that is subsequently dried at 80 °C in air. After carbonization and leaching, the inventors obtain a highly graphitic carbon gel (GRFG) whose physical characteristics are remarkably like the spherical GRF. Similar to GRF, GRFG is highly graphitic and possesses almost the same porosity. However, iron particles confined in graphitic shells are present throughout the structure. According to ICP-OES measurements performed after disintegration of the carbon by heating in a mixture of aqua regia and H₂O₂ at elevated pressures (see experimental part for details), an iron content of under 1 wt% was determined for both GRF and GRFG.

Considering the similar properties in terms of graphitization and porosity, GRFG present an even more promising catalyst support than GRF. The increase in volume yield to approximately 70 g of carbon per liter removed the last obstacle hindering the successful use of GRFG as a PEMFC support with potential for industrial application.

As shown above, the inventors developed a synthetic route towards graphitic mesoporous carbons starting from the established resorcinol formaldehyde chemistry. Using iron salts, specifically acetylacetonates, as graphitization catalyst and porogen, the inventors prepared uniform carbon spheres that surpass most carbon blacks in their share of graphitic carbon. Further, the carbons possess intraparticle mesoporosity, a property rarely found in RF materials. Leveraging this useful pore structure, the inventors loaded the carbons with Pt NPs and thus prepared a highly active electrocatalyst for the oxygen reduction reaction, that most importantly possesses enhances stability as compared to industrial catalysts. The defining advantage of the procedure is its simplicity. Additionally, as no elaborate drying, templating or activation is required, scaling up the procedure to even higher product amounts appears promising. Indeed, the inventors demonstrate that the procedure is open for significant optimization when the inventors increased the reaction concentration 25-fold, and still obtained graphitic mesoporous carbons, with an industry-relevant volume yield of 70 g carbon per liter of synthesis mixture.

## Claims

1. Process for preparing a graphitized nanoporous carbon which comprises the steps of:
a) Preparing a mixture of
i) a nucleophilic compound, selected from melamin, melam, melem, ammeline, 4,6-amino-dihydroxy-1,3,5-triazine, aminophenol, diaminobenzene, dihydroxybenzene, trihydroxybenzene and any combination thereof,
ii) formaldehyde or an oligomer thereof in a stoichiometric excess to compound i) for a complete polymerisation,
iii) a metallic graphitization catalyst in a molar ratio of the metallic graphitization catalyst to compound i) in the range of 1 to 30 to 1 to 3, optionally in the range of 1 to 10 to 1 to 3, wherein the metallic graphitization catalyst is selected from Fe-salts, Co-salts or Ni-salts of organic acids or of acidic organic compounds, in particular Fe acetate, Fe formiate, Fe oxalate, Ni oxalate, Ni acetate, Ni formiate, Co oxalate, Co acetate, Co formiate, Fe(II)(acac)₂, Fe(III)(acac)₃, Ni(II)(acac)₂, Co(II)(acac)₂, Co(III)(acac)₃ or any combination thereof, and optionally
iv) a catalytic amount of promoter compound, preferably ammonia,
in a solvent, comprising water and a C₁ to C₄ aliphatic alcohol in a volume ratio of 0% bv to 100% bv water, the remainder being the C₁ to C₃ aliphatic alcohol, referred to the total volume of the solvent; the solvent preferably being an aqueous solution having a content of 10 % to 40 % by volume of said C₁ to C₄ aliphatic alcohol;
b) heating the mixture obtained in step a) to a temperature range between 30°C and 100°C and maintaining the mixture in said temperature range for a time range between 6 and 60 hours, preferably 6 to 50 hours,
c) separating the reaction product obtained in step b) from the aqueous solvent, optionally grinding the separated reaction product and optionally washing the separated reaction product with fresh.aqueous solvent;
d) subjecting the separated reaction product obtained in step c) to a high temperature graphitization process in a temperature range of 600°C to 1000°C, whereby a graphitic framework is provided;
e) subjecting the so-obtained graphitized product obtained in step d) to a process for leaching out the metal of the metallic graphitization catalyst preferably by treatment with an inorganic acid; and
f) washing the reaction product obtained in step e) with water and C₁ to C₃ aliphatic alcohol and finally drying the washed product; followed by an optional grinding step.

2. Process for preparing a graphitized nanoporous carbon according to claim 1, comprising the additional steps of:
j) impregnating the graphitized nanoporous product obtained in step f), preferably by the incipient wetness method, with a catalytically active metal, selected from Ti, V, Cr, Mn, Fe, Co, Ni, Cu, Zn, Al, Mo, Se, Sn, Pt, Ru, Pd, W, Ir, Os, Rh, Nb, Ta, Pb, Bi, Au, Ag, Sc, orY, preferably Pt, Ru, Pd, Au, Ag, Ni, Co, or Ir, including salts and mixtures thereof, in the form of a solution of a metal salt or a mixture thereof,
k) subjecting the graphitized nanoporous product obtained in step g) to a hydrogenation process whereby catalytically active metal sites are formed;
I) subjecting the graphitized nanoporous product obtained in step h) to a further temperature treatment in a high temperature range of 600°C to 1400°C, preferably from 600°C to 1000°C in an atmosphere being inert with respect to the metal particle and the graphitized nanoporous product, whereby the microstructure is modified and the catalytically active metal sites are confined in the mesopores for the improvement of chemical and electrochemical properties.

3. Process for preparing a graphitized nanoporous carbon according to any one of claims 1 or 2, wherein compound i) is selected from resorcin, melamine and derivatives thereof, in particular resorcin.

4. Process for preparing a graphitized nanoporous carbon according to any one of claims 1 to 3, wherein the metallic graphitization catalyst is selected from Fe(II)(acac)₂, Fe(III)(acac)₃, Ni(II)(acac)₂, Co(II)(acac)₂, Co(III)(acac)₃ or any combination thereof.

5. Process for preparing a graphitized nanoporous carbon according to any one of the preceding claims wherein the concentration of compound i) in the solvent is in the range of 0,01 mol/l to 0,5 mol/l. with stirring the mixture in step b).

6. Process for preparing a graphitized nanoporous polymer according to any one of the preceding claims, wherein the concentration of compound i) in the aqueous solvent is in the range of 0,5 mol/l to 2,0 mol/l. without stirring the mixture in step b).

7. Graphitized nanoporous carbon particles obtainable according to any one of the processes as claimed in claims 1 to 6.

8. Use of the graphitized nanoporous polymer particles as claimed in claim 7 as catalyst, in particular for cathode side oxygen reduction reaction (ORR) in PEM fuel cells.
